# EUROPÄISCHE PATENTSCHRIFT

(11) **EP 2 954 232 B1**
(45) Veröffentlichungstag und Bekanntmachung des Hinweises auf die Patenterteilung: **14.03.2018**
(21) Anmeldenummer: 14702448.3
(22) Anmeldetag: 29.01.2014
(51) Int. Cl.: F16H 57/021, F16H 57/025, F16H 57/029, F16H 57/03, F16H 57/031, F16H 57/033

(54) **GETRIEBE MIT EINER LAGERANORDNUNG**
GEARBOX WITH A BEARING ASSEMBLY
BOÎTE DE VITESSES AVEC UN ENSEMBLE DE PALIER

(30) Priorität: 07.02.2013 DE 102013002050
(43) Veröffentlichungstag der Anmeldung: 16.12.2015
(73) Patentinhaber: Sew-Eurodrive GmbH & Co. KG, 76646 Bruchsal (DE)
(72) Erfinder: BARTON, Peter, 75015 Bretten (DE); DIETRICH, Stefan, 76149 Karlsruhe (DE); BECKER, Renaud, F-67630 Scheibenhard (FR); WÖPPERMANN, Markus, 76307 Karlsbad (DE)
(86) Internationale Anmeldenummer: PCT/EP2014/000235
(87) Internationale Veröffentlichungsnummer: WO 2014/121906

(56) Entgegenhaltungen:
- EP-A1- 1 059 470
- WO-A2-2010/108602
- CN-U- 202 326 924
- CN-U- 202 360 724
- CN-Y- 201 090 612
- DE-A1-102007 025 755
- DE-A1-102007 058 918
- DE-A1-102009 005 343
- DE-U- 7 002 942
- JP-A- H0 953 705
- JP-A- 2011 153 640

## Beschreibung

Die Erfindung betrifft ein Getriebe.
Die DE 10 2007 058 918 A1 zeigt ein Getriebe mit einer Lageranordnung. In der DE 10 2007 025 755 A1 ist eine Getriebeeinheit für eine Spritzgießeinheit gezeigt.

Die gattungsgemäße JP 2011 153640 A zeigt ein Enduntersetzungsgetriebe für ein Fahrzeug.
Die CN 202 326 924 U zeigt die allgemeine Struktur eines Parallelwellengetriebes mit Schrägverzahnung.

Die CN 202 360 724 U offenbart eine leckdichte Steckvorrichtung für ein Getriebe eines elektrischen Hubwagens.
Die CN 201 090 612 Y zeigt eine Lagerabdeckung.

Aus der EP 1 059 470 A1 ist ein Getriebegehäuse mit in Wälzlagern gelagerten Getriebewellen für Wechselgetriebe von Kraftfahrzeugen bekannt.

In der JP H09 53705 A ist ein Gehäuse eines Untersetzungsgetriebes gezeigt.

Die DE 10 2009 005343 A1 offenbart ein Kegelradgetriebe.
Die WO 2010/108602 A2 zeigt ein Getriebe.
Aus der DE 70 02 942U ist ein Getriebegehäuse bekannt.

In der DE 10 2007 058918 A1 ist ein Getriebe gezeigt.

Der Erfindung liegt daher die Aufgabe zugrunde ein Getriebe weiterzubilden, wobei der Umweltschutz verbessert werden soll.

Erfindungsgemäß wird die Aufgabe bei dem Getriebe nach den in Anspruch 1 angegebenen Merkmalen gelöst.

Wichtige Merkmale der Erfindung bei dem Getriebe mit der Lageranordnung mit Gehäuseteil, wobei eine Welle mittels eines Lagers im Gehäuseteil gelagert ist, insbesondere wälzgelagert ist, sind, dass
das Lager in einer, insbesondere durch das Gehäuseteil, durchgehenden Stufenbohrung im Gehäuseteil aufgenommen ist,
wobei ein Deckelteil die Stufenbohrung verschließt, insbesondere nach außen verschließt,
wobei das Deckelteil mit dem Gehäuseteil kraftschlüssig verbunden ist,
wobei das Deckelteil in der Stufenbohrung aufgenommen ist,
wobei ein Oberflächenabschnitt der Außenseite des Deckelteils in einer Flucht angeordnet ist zu einer Stufe der Stufenbohrung, insbesondere so dass der Oberflächenabschnitt auf einer Axialposition der Stufe angeordnet ist.

Von Vorteil ist dabei, dass die Lageranordnung in dem Gehäuseteil mittels des Deckelteils von der Umgebung isolierbar ist. Somit ist die Lageranordnung vor eindringenden Schmutzpartikeln schützbar und die Betriebssicherheit verbesserbar.

Dabei ist die kraftschlüssige Verbindung des Deckelteils mit dem Gehäuseteil in einfacher Art und Weise herstellbar, so dass die Lageranordnung kostengünstig fertigbar ist.

Mittels des Deckelteils ist die Lageranordnung öldicht ausführbar. Somit ist die Lageranordnung auch in Anwendungsbereichen mit hohen hygienischen Anforderungen einsetzbar.
Vorteilhafterweise ist der Oberflächenabschnitt des Deckelteils in einer Flucht mit der Stufe angeordnet. Somit spannen der Oberflächenabschnitt und die Stufe eine Ebene auf, so dass das Gehäuseteil mit dem Deckelteil leicht zu reinigen ist.
Bei einer vorteilhaften Ausgestaltung nimmt der Innendurchmesser, insbesondere der lichte Durchmesser, der Stufenbohrung in Bohrungsrichtung, also axialer Richtung, insbesondere also in Wellenachsrichtung, monoton ab. Von Vorteil ist dabei, dass das Deckelteil in einfacher Art und Weise in die Stufenbohrung einbringbar ist. Es ist also eine kostengünstige Montage ermöglicht.
Vorteilhafterweise nimmt der Innendurchmesser der Bohrung zum Lager hin ab.
Bei einer vorteilhaften Ausgestaltung weist die Stufenbohrung eine Stufe auf, die eine Fase umfasst. Von Vorteil ist dabei, dass die Stufe als Anschlag für ein Montagewerkzeug für das Deckelteil verwendbar ist. Dabei erleichtert die Fase die Positionierung des Deckelteils in der Stufenbohrung.
Bei einer vorteilhaften Ausgestaltung ist die Axialposition des Oberflächenabschnitts die am weitesten vom Lager entfernte Axialposition des Deckelteils. Von Vorteil ist dabei, dass das Deckelteil mittels eines handelsüblichen Stempelwerkzeugs in die Stufenbohrung einbringbar ist und bündig mit der Stufe in der Stufenbohrung ausrichtbar ist. Dabei weist das Stempelwerkzeug eine kreisrunde ebene Stempelfläche mit einem Durchmesser auf, der im Wesentlichen gleich dem maximalen Durchmesser der Stufenbohrung ist. Somit ist das Deckelteil mittels des Stempelwerkzeugs gleichmäßig in die Stufenbohrung einpressbar. Dabei ist ein Verkanten des Deckelteils in der Stufenbohrung verhinderbar, wodurch die Dichtheit der Verbindung zwischen dem Deckelteil und dem Gehäuseteil verbesserbar ist. Erfindungsgemäß ist axial zwischen dem Lager und dem Deckelteil ein Sicherungsring in einer radial gerichteten Ringnut der Stufenbohrung angeordnet. Von Vorteil ist dabei, dass der Sicherungsring das Lager in axialer Richtung begrenzt, so dass das Deckelteil von dem Lager beabstandbar ist. Somit ist die Sicherheit der Lageranordnung verbessert. Erfindungsgemäß ist der Sicherungsring von dem Deckelteil beabstandet. Von Vorteil ist dabei, dass das Risiko eines Montagefehlers reduzierbar ist. Dabei wirkt die Beabstandung als Toleranzbereich, so dass bei einer Abweichung der Lage des Deckelteils innerhalb der Stufenbohrung innerhalb dieses Toleranzbereiches eine Verformung des Deckelteils verhinderbar ist. Dadurch ist das Risiko einer Ölleckage am Deckelteil reduzierbar und somit die Betriebssicherheit verbesserbar. Erfindungsgemäß ist ein Distanzring axial zwischen dem Sicherungsring und einem Außenring des Lagers angeordnet, wobei der Sicherungsring zusammen mit dem Distanzring den Außenring des Lagers axial begrenzt. Von Vorteil ist dabei, dass eine axiale Kraft, welche über die Welle auf das Lager wirkt, von dem Distanzring und dem Sicherungsring aufnehmbar ist. Somit sind die Welle und das Lager in axialer Richtung begrenzbar mittels des Distanzrings und des Sicherungsrings.
Bei einer vorteilhaften Ausgestaltung ist das Deckelteil topfförmig ausgeführt. Von Vorteil ist dabei, dass das Deckelteil in einfacher Art und Weise fertigbar ist. Beispielsweise ist das Deckelteil als Stanzbiegeteil fertigbar.
Bei einer vorteilhaften Ausgestaltung weist das Deckelteil einen Bodenabschnitt und einen Wandabschnitt auf. Von Vorteil ist dabei, dass die Lageranordnung zum Gehäuseabschnitt hin abdichtbar ist mittels des Wandabschnitts. Das Wellenende ist abdeckbar mittels des Bodenabschnitts.
Bei einer vorteilhaften Ausgestaltung nimmt die Wandstärke des Wandabschnitts zum Bodenabschnitt hin monoton zu. Von Vorteil ist dabei, dass ein vom Bodenabschnitt abgewandter Endbereich des Wandabschnitts elastisch auslenkbar ausführbar ist. Somit ist die Dichtheit der Verbindung des Deckelteils mit dem Gehäuseteil verbesserbar.
Bei einer vorteilhaften Ausgestaltung nimmt der Außenradius des Wandabschnitts in einem axialen, insbesondere dem Lager zugewandten, Endbereich zum Bodenabschnitt hin linear zu. Von Vorteil ist dabei, dass eine Fase ausführbar ist an dem Endbereich, so dass das Einführen des Deckelteils in die Stufenbohrung vereinfachbar ist.

Bei einer vorteilhaften Ausgestaltung nimmt der Innenradius des Wandabschnitts stufenartig zu. Von Vorteil ist dabei, dass die Festigkeit des Wandabschnitts zum Bodenabschnitt hin zunimmt. Somit ist ein vom Bodenabschnitt abgewandter Endbereich des Wandabschnitts elastischer ausführbar als ein dem Bodenabschnitt zugewandter Endbereich des Wandabschnitts. Dadurch ist das Einführen das Deckelteils in die Stufenbohrung vereinfachbar und gleichzeitig eine sichere Verbindung des Deckelteils mit dem Gehäuseteil erreichbar.

Bei einer vorteilhaften Ausgestaltung ist das Deckelteil als Blechteil, insbesondere Stahlblechteil, insbesondere Stanz-Biegeteil ausgeführt, wobei das Blechteil zumindest teilweise mit Kunststoff beschichtet ist. Von Vorteil ist dabei, dass das Deckelteil in einfacher Art und Weise kostengünstig herstellbar ist. Die geringe Wandstärke von Blechteilen, insbesondere die kleiner als 3 mm ist, begünstigt die elastische Verformbarkeit des Wandabschnitts, so dass die Montage des Deckelteils vereinfachbar ist.

Bei einer vorteilhaften Ausgestaltung ist der Kunststoff ein Elastomer. Von Vorteil ist dabei, dass das Blechteil des Deckelteils mittels des Elastomers vor Beschädigungen schützbar ist. Somit ist die Betriebssicherheit verbesserbar.

Bei einer vorteilhaften Ausgestaltung ist die Kunststoffbeschichtung auch radial zwischen dem Blechteil und dem Gehäuseteil angeordnet, insbesondere wobei die Kunststoffbeschichtung elastisch verformt ist, insbesondere so dass die Kunststoffbeschichtung das Blechteil zum Gehäuseteil hin abdichtet. Von Vorteil ist dabei, dass ein zusätzliches Dichtmittel einsparbar ist, wodurch die Produktionskosten reduzierbar sind.

Bei einer vorteilhaften Ausgestaltung nimmt der Radius der Welle zum Lager hin stufenartig ab, insbesondere wobei eine Stufe in der Welle von einem Innenring des Lagers beabstandet ist, wobei der maximale Außenradius der Welle größer ist als ein Innenradius des Innenrings, wobei eine Buchse auf der Welle angeordnet ist. Von Vorteil ist dabei, dass axiale Kräfte welche auf ein auf der Welle angeordnetes Zahnrad wirken mittels der Buchse auf das Lager übertragbar sind. Somit ist die Welle entlastbar. Insbesondere die in der Welle ausgeführte Stufe ist entlastbar, so dass ein Ausbrechen der Welle verhinderbar ist. Somit ist also die Betriebssicherheit der Lageranordnung verbesserbar.

Bei einer vorteilhaften Ausgestaltung berührt die Buchse den Innenring. Von Vorteil ist dabei, dass die Buchse axial auf die Buchse wirkende Kräfte direkt auf den Innenring des Lagers überträgt. Somit ist also die Welle entlastbar.

Bei einer vorteilhaften Ausgestaltung ist ein Innendurchmesser der Buchse größer als der Innendurchmesser des Innenrings, insbesondere wobei der Außendurchmesser der Buchse kleiner als der Außendurchmesser des Innenrings ist. Von Vorteil ist dabei, dass eine axial auf die Buchse wirkende Kraft vollständig auf den Innenring übertragbar ist. Vorteilhafterweise berührt dabei die gesamte radiale Fläche der Buchse den Innenring, so dass eine sichere Kraftübertragung realisierbar ist.

Bei einer vorteilhaften Ausgestaltung ist die Buchse axial zwischen einem mit der Welle verbundenen Zahnrad und dem Innenring angeordnet. Von Vorteil ist dabei, dass axiale Kräfte und/oder Kräfte mit Axialanteil, die auf das Zahnrad wirken, mittels der Buchse zum Lager hin ableitbar sind. Somit ist also die Welle entlastbar und die Betriebssicherheit ist verbesserbar.

Bei einer vorteilhaften Ausgestaltung ist zwischen dem Innenring und dem Außenring des Lagers zumindest ein Wälzkörper angeordnet. Von Vorteil ist dabei, dass ein mit Wälzkörpern versehenes Wälzlager nur geringer Rollreibung unterliegt.

Wichtige Merkmale der Erfindung bei dem Getriebe mit einer Lageranordnung sind, dass ein Gehäuse des Getriebes alle Verzahnungsteile des Getriebes umgibt und die Lager des Getriebes aufnimmt,
wobei das Gehäuse einen Rahmenabschnitt und einen Hüllabschnitt aufweist, insbesondere
wobei Rahmenabschnitt und Hüllabschnitt einstückig ausgeformt und/oder stoffschlüssig verbunden sind,
wobei der Rahmenabschnitt eine größere Wandstärke aufweist als der Hüllabschnitt,
wobei der Rahmenabschnitt zwei Außenschenkelabschnitte und einen Mittelschenkelabschnitt aufweist.

Von Vorteil ist dabei, dass das Gehäuse mittels des Rahmenabschnitts versteifbar ist. Die im Gehäuse angeordneten Verzahnungsteile sind mittels des Hüllabschnitts schützbar. Somit ist das Gewicht des Gehäuses reduzierbar. Dabei ist ein leichtes Getriebe kostengünstig herstellbar, da der Materialaufwand reduzierbar ist. Zusätzlich ist die Transportierbarkeit und Positionierbarkeit des Getriebes verbesserbar. Somit ist auch der Umweltschutz verbesserbar, weil Material und Energie einsparbar sind.
Bei einer vorteilhaften Ausgestaltung ist jeder Außenschenkelabschnitt in einem nichtverschwindenden Winkel zum Mittelschenkelabschnitt angeordnet, insbesondere wobei die Außenschenkelabschnitte und der Mittelschenkelabschnitt U-förmig angeordnet sind. Von Vorteil ist dabei, dass der versteifende Rahmenabschnitt sich über drei Seiten des Gehäuses erstreckt. Somit ist die Verdrehsteifigkeit des Gehäuses verbesserbar. Erfindungsgemäß weist zumindest ein Außenschenkelabschnitt zumindest einen Ringabschnitt auf, insbesondere wobei der Ringabschnitt einstückig mit dem Außenschenkelabschnitt ausgeführt ist. Von Vorteil ist dabei, dass in dem Ringabschnitt ein Lager zur Lagerung einer Welle des Getriebes aufnehmbar ist. Dabei sind also Kräfte, die auf das Lager wirken, von dem Außenschenkelabschnitt aufnehmbar. Erfindungsgemäß weist der Mittelschenkelabschnitt einen Stützabschnitt auf, insbesondere wobei der Stützabschnitt einstückig mit dem Mittelschenkelabschnitt ausgeführt ist. Von Vorteil ist dabei, dass das Gehäuse mittels des Stützabschnitts abstützbar ist. Dabei ist die einstückige Ausführung des Stützabschnitts mit dem Mittelschenkelabschnitt besonders vorteilhaft, da eine feste Verbindung des Stützabschnitts mit dem Mittelschenkelabschnitt realisierbar ist. Das Risiko, dass der Stützabschnitt aus dem Mittelschenkelabschnitt herausbricht, ist reduzierbar. Somit ist die Betriebssicherheit verbesserbar.

Bei einer vorteilhaften Ausgestaltung ist ein Ring mit dem Ringabschnitt verbunden, insbesondere lösbar verbunden, insbesondere wobei der Ring mit dem Ringabschnitt schraubverbunden ist, wobei das Gehäuse auf einem Ständerteil zumindest teilweise abgestützt angeordnet ist, wobei das Ständerteil, insbesondere an seiner Oberseite, eine Vertiefung zur Aufnahme des Rings aufweist, insbesondere wobei das Ständerteil ein Auflager für den Ring bildet. Von Vorteil ist dabei, dass das Gehäuse auf dem Ständerteil auflagerbar ist. Das Ständerteil ist dabei schwingungsdämpfend ausführbar, so dass das Gehäuse schwingungsgedämpft auflagerbar ist. Dadurch ist die Standzeit des Getriebes erhöhbar.

Vorteilhafterweise ist der Ring in einfacher Art und Weise auf verschiedenen Ringabschnitten montierbar. Somit ist die Position des Ständerteils in einfacher Art und Weise an die Anwendung anpassbar. Dabei ist die Zahl der Bauteile reduzierbar und der Umweltschutz verbesserbar.

Bei einer vorteilhaften Ausgestaltung ist ein Teilring, insbesondere ein Halbring, mit dem Ständerteil verbunden, insbesondere schraubverbunden. Von Vorteil ist dabei, dass der Ring mittels des Teilrings auf dem Ständerteil fixierbar ist. Dadurch sind die Gewichtskraft des Getriebes und auf das Getriebe wirkende Torsionskräfte vom Ständerteil aufnehmbar.

Bei einer vorteilhaften Ausgestaltung ist der Ring zwischen dem Teilring und dem Ständerteil formschlüssig gehalten, insbesondere zwischengeordnet und/oder eingeklemmt angeordnet. Von Vorteil ist dabei, dass der Ring großflächig und somit sicher auf dem Ständerteil fixierbar ist.

Bei einer vorteilhaften Ausgestaltung ist durch die Außenschenkelabschnitte und den Mittelschenkelabschnitt eine Ebene aufgespannt, insbesondere wobei die Ebene horizontal und/oder im Wesentlichen parallel zu einer Bodenfläche des Gehäuses ausgerichtet ist. Von Vorteil ist dabei, dass die Masse des Gehäuses, die in erster Linie auf den Rahmenabschnitt konzentriert ist, in horizontaler Richtung gleichmäßig verteilbar ist. Somit ist die Verdrehsteifigkeit des Gehäuses weiter verbesserbar.

Bei einer vorteilhaften Ausgestaltung ist die Wandstärke des Rahmenabschnitts größer als in jedem anderen Bereich des Gehäuses. Von Vorteil ist dabei, dass die Steifigkeit des Gehäuses verbesserbar ist. Gleichzeitig ist die Masse des Gehäuses reduzierbar, wodurch Material einsparbar ist.

Bei einer vorteilhaften Ausgestaltung weist jeweils zumindest ein Ringabschnitt jedes Außenschenkelabschnitts jeweils zumindest eine Lageraufnahme auf, in der ein Lager aufgenommen ist zur Lagerung zumindest einer Welle des Getriebes. Von Vorteil ist dabei, dass die Lageraufnahmen mittels der Ringabschnitte stabil und sicher ausführbar sind. Kräfte, die von den in den Lagern gelagerten Wellen auf die Lager und somit die Lageraufnahmen wirken, sind vom Rahmenabschnitt aufnehmbar. Somit ist die Betriebssicherheit des Getriebes verbesserbar.

Bei einer vorteilhaften Ausgestaltung ist eine abtreibende Welle des Getriebes mittels Lagern in Ringabschnitten der Außenschenkelabschnitte gelagert. Von Vorteil ist dabei, dass die abtreibende Welle, welche das Drehmoment auf die mit ihr verbundene Applikation überträgt, sicher lagerbar ist. Dabei sind auch Kräfte, die von der Applikation auf die abtreibende Welle übertragen werden, mittels des Rahmenabschnitts aufnehmbar.

Bei einer vorteilhaften Ausgestaltung kragt der Stützabschnitt aus dem Mittelschenkelabschnitt, insbesondere als nach außen gerichtete Erhöhung, aus und/oder ragt hervor, insbesondere wobei der Stützabschnitt als Lasche an dem Mittelschenkelabschnitt ausgeführt ist, wobei der Stützabschnitt mit einem Stützteil verbunden ist, insbesondere lösbar verbunden ist, insbesondere schraubverbunden ist. Von Vorteil ist dabei, dass das Stützteil als Drehmomentstütze verwendbar ist, so dass Torsionskräfte, welche auf das Getriebe wirken, mittels des Stützteils aufnehmbar sind. Dabei ist das Stützteil auf einem Fundament oder einer Tragekonstruktion aufstellbar. Das Stützteil ist weiterhin mit einem Dämpfungselement versehbar, so dass das Gehäuse gedämpft auflagerbar ist.

Bei einer vorteilhaften Ausgestaltung weist der Stützabschnitt eine Bohrung auf, insbesondere wobei die Bohrrichtung senkrecht ausgeführt ist zu der Ebene, die mittels der Außenschenkelabschnitte und dem Mittelschenkelabschnitt aufgespannt ist. Von Vorteil ist dabei, dass zur Verbindung des Stützteils mit dem Stützabschnitt eine Schraube oder ein Stift oder ein abgesetzter Bolzen durch die Bohrung hindurchführbar ist, so dass die Verbindung in einfacher Art und Weise ausführbar ist. Die senkrechte Ausrichtung der Bohrung ermöglicht dabei, dass insbesondere Querkräfte mittels des Stützteils aufnehmbar sind.
Vorteilhafterweise ist die Bohrrichtung parallel zu dem Normalenvektor dieser Ebene ausgerichtet. Erfindungsgemäß ist ein Kupplungsgehäuse mit dem Rahmenabschnitt verbunden, wobei der Außendurchmesser des Kupplungsgehäuses zum Gehäuse hin abnimmt, insbesondere wobei das Kupplungsgehäuse konusartig und/oder im Wesentlichen als ein Konus ausgeführt ist, wobei im Innendurchmesser des Kupplungsgehäuses zum Gehäuse hin eine Stufe ausgebildet ist, so dass die Wandstärke des Kupplungsgehäuses stufenartig zunimmt, insbesondere wobei in Umfangsrichtung in der Stufe axiale Bohrungen ausgeführt sind, insbesondere wobei durch die Bohrungen Schrauben hindurchgeführt sind zur Verbindung des Kupplungsgehäuses mit dem Gehäuse. Von Vorteil ist dabei, dass das Kupplungsgehäuse, welches eine Kupplung zur Verbindung einer Motorwelle mit der eintreibenden Welle des Getriebes aufnimmt, die Kupplung gehäusebildend umgibt, so dass die Kupplung schützbar ist vor Verschmutzungen. Außerdem ist die Sicherheit des Getriebes verbesserbar, da Fremdkörper sich nicht in der Kupplung verfangen können.

Bei einer vorteilhaften Ausgestaltung weist ein Teilabschnitt des Kupplungsgehäuses eine größere Wandstärke auf als andere Bereiche des Kupplungsgehäuses. Von Vorteil ist dabei, dass die Verdrehsteifigkeit des Kupplungsgehäuses verbesserbar ist.
Bei einer vorteilhaften Ausgestaltung ist ein Motor mittels des Kupplungsgehäuses mit dem Gehäuse verbunden. Von Vorteil ist dabei, dass der Motor vom Kupplungsgehäuse haltbar ist. Somit ist eine zusätzliche Haltevorrichtung für den Motor verzichtbar. Es sind also Bauteile einsparbar, so dass die Anbindung des Motors kostengünstig ausführbar ist.
Bei einer vorteilhaften Ausgestaltung erstreckt der Teilabschnitt sich axial vom Gehäuse zum Motor und überdeckt einen Umfangswinkelbereich von weniger als 90° und/oder ist in Umfangsrichtung begrenzt. Von Vorteil ist dabei, dass eine hohe Verdrehsteifigkeit bei reduzierbarem Materialaufwand erreichbar ist.

Bei einer vorteilhaften Ausgestaltung ist der Rahmenabschnitt mittels des Teilabschnitts in dem Kupplungsgehäuse fortgesetzt. Von Vorteil ist dabei, dass das Kupplungsgehäuse auf den Rahmenabschnitt ausrichtbar ist. Somit ist die Gewichtskraft des Motors auf den verstärkten Rahmenabschnitt übertragbar und ein Ausbrechen des dünneren Hüllabschnitts ist verhinderbar.

Bei einer vorteilhaften Ausgestaltung weist der Teilabschnitt eine Bohrung auf, welche mittels eines Verschlussteils verschlossen ist, insbesondere wobei die Bohrung mit einem Inspektionsdeckel dicht und lösbar verschlossen ist. Von Vorteil ist dabei, dass die in dem Kupplungsgehäuse angeordnete Kupplung durch die Inspektionsöffnung überprüfbar ist. Dadurch ist die Zuverlässigkeit der Kupplung verbesserbar.

Bei einer vorteilhaften Ausgestaltung erstreckt eine eintreibende Welle des Getriebes sich von dem Kupplungsgehäuse durch den ersten und den zweiten Außenschenkelabschnitt hindurch. Von Vorteil ist dabei, dass die eintreibende Welle des Getriebes an beiden Enden der Welle in einfacher Art und Weise verbindbar ist mit der Motorwelle.

Bei einer vorteilhaften Ausgestaltung ist die eintreibende Welle durch zwei Ringabschnitte zumindest teilweise hindurchgeführt. Von Vorteil ist dabei, dass in den Ringabschnitten die Lager der Welle anordenbar sind, so dass das Getriebe kompakt ausführbar ist.

Bei einer vorteilhaften Ausgestaltung ist ein von dem Kupplungsgehäuse abgewandter Endbereich der eintreibenden Welle mit einer Bremsvorrichtung verbunden. Von Vorteil ist dabei, dass im Falle einer Bremsung die Verzahnungsteile des Getriebes entlastbar sind, da die Bremsvorrichtung mittels der eintreibenden Welle direkt mit dem Motor verbunden ist.

Bei einer vorteilhaften Ausgestaltung weist der Hüllabschnitt einen Versteifungsflächenabschnitt auf, wobei die Ausdehnung, insbesondere die Höhe, des Gehäuses in einer Richtung senkrecht zur Achse der abtreibenden Welle und senkrecht zu den Außenschenkelabschnitten, von der abtreibenden Welle des Getriebes zur eintreibenden Welle des Getriebes hin monoton abnimmt, insbesondere in einem zu einem Außenschenkelabschnitt parallelen Längenabschnitt des Gehäuses linear abnimmt, insbesondere steht ein Normalenvektor des im Wesentlichen ebenen Versteifungsflächenabschnitts in einem nichtverschwindenden Winkel zu einem Normalenvektor der Ebene, die durch die Außenschenkelabschnitte und den Mittelschenkelabschnitt aufgespannt ist. Von Vorteil ist dabei, dass mittels des Versteifungsflächenabschnitts die Verdrehsteifigkeit des Gehäuses verbesserbar ist. Dabei fungiert der Versteifungsflächenabschnitt als integrierte Drehmomentstütze für das Getriebe. Somit ist eine zusätzliche Drehmomentstütze einsparbar und das Getriebe kostengünstig herstellbar.

Die Erfindung wird nun anhand von Abbildungen näher erläutert:
In der Figur 1 ist ein erfindungsgemäßes Getriebe in Schrägansicht gezeichnet.
In der Figur 2 ist das erfindungsgemäße Getriebe in einer weiteren Schrägansicht gezeichnet.
Figur 3 zeigt eine erfindungsgemäße Lageranordnung mit einem Deckelteil in Schnittansicht.
In Figur 4 ist eine schematische Ansicht eines Rahmenabschnitts des erfindungsgemäßen Getriebes dargestellt.
Figur 5 zeigt eine schematische Ansicht einer Auflagerung des Rahmenabschnitts.

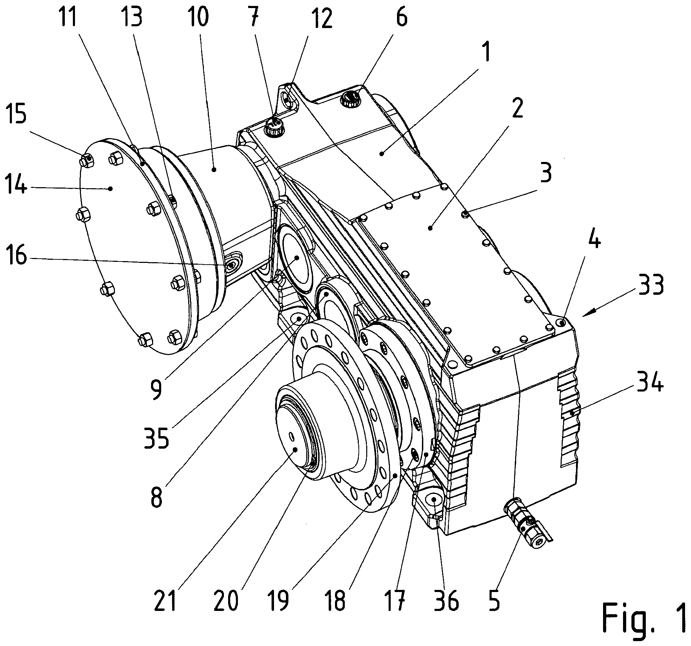

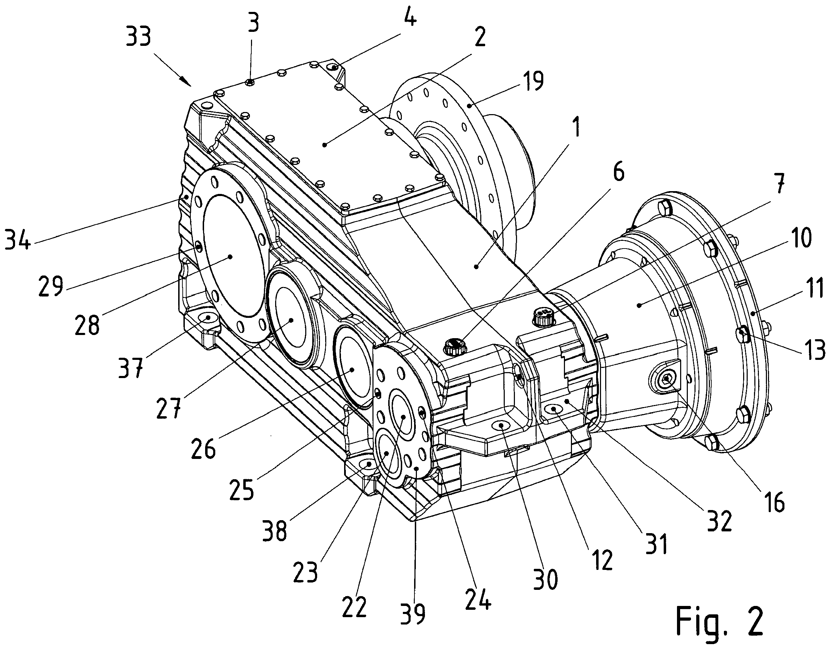

Das in Figur 1 und 2 dargestellte erfindungsgemäße Getriebe weist ein Gehäuse 33 auf, in welchem nicht dargestellte Zahnräder und Wellen angeordnet sind.

Das Gehäuse 33 ist einstückig beziehungsweise einteilig und im Wesentlichen quaderförmig ausgeführt, es ist vorzugsweise als Gussteil ausgeführt. Das Gehäuse 33 weist einen Versteifungsflächenabschnitt 1 auf, wobei eine den Versteifungsflächenabschnitt 1 aufweisende Ebene eine eine Bodenfläche des Gehäuses 33 aufweisende Ebene in einem nichtverschwindenden Winkel, der kleiner als 90° ist, schneidet. Die Höhe des Gehäuses 33 nimmt also in einer Richtung entlang des Versteifungsflächenabschnitts 1 linear ab. Dabei ist die Höhe im Bereich einer abtreibenden Welle 21 größer als die Höhe im Bereich einer eintreibenden Welle. Die Höhe des Gehäuses 33 ist hier definiert als die Ausdehnung des Gehäuses senkrecht zur Wellenachsrichtung und senkrecht zu einer Ebene, die eine eintreibende Welle und eine abtreibende Welle 21 des Getriebes umfasst.

Angrenzend an den Versteifungsflächenabschnitt 1 weist das Gehäuse 33 eine nicht dargestellte durchgehende Ausnehmung auf, welche mittels eines, insbesondere rechtwinkeligen, Deckelteils 2 verschlossen ist. Das Deckelteil 2 ist mittels Befestigungsmitteln 3 mit dem Gehäuse 33 verbunden, vorzugsweise sind die Befestigungsmittel als Schrauben ausgeführt und durch Bohrungen im Deckelteil 2 hindurchgeführt und in Gewindebohrungen im Gehäuse 33 eingeschraubt. Die Ausnehmung ist dabei groß genug, um Zahnräder durch die Ausnehmung hindurch in das Gehäuse 33 hineinzubringen.

An der dem Deckelteil 2 gegenüberliegenden Bodenfläche ist zumindest eine Verbindungsfläche mit einer Bohrung (35, 36, 37, 38) angeordnet. Durch die Bohrung (35, 36, 37, 38) ist ein Befestigungsmittel, insbesondere eine Schraube oder eine Gewindestange, hindurchführbar zur Verbindung des Gehäuses 33 mit einem nicht dargestellten Trageelement oder einem Hallenboden. Die Verbindungsfläche ist dazu im Wesentlichen parallel zu der Bodenfläche angeordnet. Vorzugsweise erstreckt sich die Bohrung (35, 36, 37, 38) parallel zum Normalenvektor der Verbindungsfläche.

Das Gehäuse 33 weist einen Oberflächenabschnitt 34 auf zum Anbringen einer angeformten dreidimensionalen Marke. Der Oberflächenabschnitt 34 weist dazu wellenartige Strukturen auf.

Zur Verbindung eines Kupplungsgehäuses mit dem Gehäuse 33 weist das Gehäuse 33 eine Anschlussfläche 39 auf, die eine durchgehende Bohrung zur Aufnahme eines Lagerteils einer nicht dargestellten eintreibenden Welle des Getriebes umgibt. Dabei ist die Anschlussfläche 39 in einer Ebene des Gehäuses 33 im Wesentlichen kreisförmig, wobei die Kreisform an zwei Seiten abgeflacht ist, also in Umfangsrichtung teilweise linear ausgeführt ist. In der Anschlussfläche 39 sind zumindest eine Gewindebohrung 24 und zumindest eine Zentrierbohrung 25 angeordnet, die auf einem die Bohrung umgebenden Kreisbogen angeordnet sind. Die Bohrung ist mittels eines Deckelteils 22 verschlossen. Dazu ist das Deckelteil 22 kraftschlüssig mit dem Gehäuse 33 verbunden.

Eine zweite durchgehende Bohrung zur Aufnahme eines Lagerteils ist ebenfalls in der Anschlussfläche 39 angeordnet. Die Anschlussfläche 39 umgibt also auch die zweite Bohrung. Dazu weicht die Außenkontur der Anschlussfläche 39 im Bereich der zweiten Bohrung von der Kreisform ab und weist eine Wölbung auf. Die zweite Bohrung ist mittels eines Deckelteils 23 verschlossen. Dazu ist das Deckelteil 23 kraftschlüssig mit dem Gehäuse 33 verbunden.

Auf der der Anschlussfläche 39 gegenüberliegenden Seite des Gehäuses 33 ist eine weitere Anschlussfläche angeordnet. Die weitere Anschlussfläche ist im Wesentlichen spiegelsymmetrisch zur Anschlussfläche 39 ausgeführt. Sie weist also zwei durchgehende Bohrungen, Gewindebohrungen und zumindest eine Zentrierbohrung auf. Dabei ist eine Bohrung mittels eines Deckelteils verschlossen. In der Bohrung ist ein Lager aufgenommen. Durch die Bohrung in der weiteren Anschlussfläche ist die eintreibende Welle des Getriebes hindurchgeführt.

Ein Kupplungsgehäuse für eine nicht dargestellte Kupplung, insbesondere Klauenkupplung ist mit dem Getriebe mittels der weiteren Anschlussfläche verbunden, insbesondere schraubverbunden. Das Kupplungsgehäuse ist im Wesentlichen konisch ausgeführt, wobei sein Durchmesser sich zum Getriebe hin verjüngt.

Das Kupplungsgehäuse weist einen Flanschabschnitt 10 und einen Verbindungsabschnitt 11 auf. Der Flanschabschnitt 10 ist dabei zwischen der Anschlussfläche und dem Verbindungsabschnitt 11 angeordnet. Eine zur ebenen Anschlussfläche parallele Schnittfläche des Flanschabschnitts 10 weicht von der kreisförmigen Grundfläche des Anschlussflansches ab. Die Schnittfläche ist an zwei Seiten abgeflacht, so dass der Flanschabschnitt 10 mit der Anschlussfläche zumindest teilweise in Deckung bringbar ist.

Der abgeflachte Teilabschnitt des Flanschabschnitts 10 weist dabei eine größere Wandstärke auf als andere Bereiche des Flanschabschnitts 10. Der Teilabschnitt erstreckt sich dabei von dem Gehäuse 33 bis zum Verbindungsabschnitt 11.

Der Flanschabschnitt 10 weist zumindest eine Bohrung auf, welche mit einem Verschlussteil 16 verschlossen ist. Dabei ist das Verschlussteil 16 mit dem Flanschabschnitt 10 schraubverbunden. Das Verschlussteil 16 ist in einem abgeflachten Teilabschnitt des Flanschabschnitts 10 angeordnet. Die Bohrung im Flanschabschnitt fungiert als Inspektionsöffnung. Somit ist also die in dem Kupplungsgehäuse angeordnete Klauenkupplung inspizierbar.

Der Verbindungsabschnitt 11 ist mit dem Flanschabschnitt 10 verbunden, vorzugsweise schraubverbunden. Der Verbindungsabschnitt 11 weist Bohrungen auf zur Verbindung mit einem Anschlussflansch eines nicht dargestellten Motors. Zum Transport des Getriebes wird der Verbindungsabschnitt 11 mit einem Abdeckteil 14 verschlossen. Dazu sind in dem Abdeckteil 14 Bohrungen vorgesehen. Das Abdeckteil 14 ist mittels durch die Bohrungen hindurchgeführter Schrauben 13 schraubverbunden mit dem Verbindungsabschnitt 11.

In einem weiteren nicht dargestellten Ausführungsbeispiel sind der Flanschabschnitt 10 und der Verbindungsabschnitt 11 einstückig und/oder einteilig ausgeführt, insbesondere als ein einziges Gussteil ausgeführt.

Das Kupplungsgehäuse ist wahlweise mit der Anschlussfläche 39 oder der weiteren Anschlussfläche verbindbar. Mittels des Verbindungsabschnitts 11 ist das Kupplungsgehäuse mit einem Gehäuse eines nicht dargestellten Motors verbindbar. Dazu nimmt der Innendurchmesser des Kupplungsgehäuses zum Gehäuse 33 hin stufenartig zu. Das Kupplungsgehäuse weist also eine Stufe auf. In dieser Stufe sind in Umfangsrichtung axiale Bohrungen angeordnet, durch welche nicht dargestellte Verbindungsschrauben hindurchführbar sind zur Verbindung des Kupplungsgehäuses mit dem Gehäuse 33.

Das Getriebe weist eine abtreibende Welle 21 auf. Die abtreibende Welle 21 ist durch eine Bohrung im Gehäuse 33 hindurchgeführt. Ein Ring 17 ist mit dem Gehäuse 33 mittels zumindest eines Befestigungsmittels 18 verbunden, insbesondere schraubverbunden mittels Schrauben. Dabei sind die Schrauben in Gewindebohrungen im Gehäuse 33 eingeschraubt. Die abtreibende Welle ist durch den Ring 17 hindurchgeführt.

Mit der Welle 21 ist eine Flanschkupplung 19 verbunden. Dabei ist die Flanschkupplung 19 mittels einer Passfeder und/oder Pressverbindung mit der Welle 21 formschlüssig und/oder kraftschlüssig verbunden und von dem Ring 17 beabstandet angeordnet. Ein auf der Welle 21 angeordneter Sicherungsring 20 fixiert die Flanschkupplung in Achsrichtung der Welle 21. Die Flanschkupplung 19 weist Bohrungen auf zur Verbindung einer nicht dargestellten Applikation mit dem Getriebe.

Auf der der Flanschkupplung 19 gegenüberliegenden Seite des Gehäuses 33 ist eine weitere durchgehende Bohrung in dem Gehäuse 33 angeordnet. In dieser Bohrung ist ein Lager zur Lagerung der abtreibenden Welle 21 angeordnet. Gewindebohrungen 29 sind im Wesentlichen in Umfangsrichtung um diese Bohrung in dem Gehäuse 33 angeordnet. Die Bohrung ist mittels eines Deckelteils 28 verschließbar. Dazu ist das Deckelteil 28 kraftschlüssig mit dem Gehäuse 33 verbunden. Somit ist die abtreibende Welle 21 wahlweise auch auf der gegenüberliegenden Seite des Gehäuses 33 anordenbar.

Zwischen der Bohrung für die eintreibende Welle und der Bohrung für die abtreibende Welle sind auf zwei Seiten des Gehäuses 33 jeweils zumindest zwei durchgehende Bohrungen in dem Gehäuse 33 angeordnet. Dabei sind in diesen Bohrungen Lager aufgenommen zur Lagerung von in dem Gehäuse 33 angeordneten Wellen und Zahnrädern. Die Bohrungen sind mittels Deckelteilen (8, 9, 26, 27) verschlossen. Dazu sind die Deckelteile (8, 9, 26, 27) kraftschlüssig mit dem Gehäuse 33 verbunden.

Das Gehäuse 33 weist an einer kurzen Seitenfläche einen Stützabschnitt 32 auf. Der Stützabschnitt 32 ist als eine Auskragung im Gehäuse 33 ausgeführt. In dem Stützabschnitt 32 sind Bohrungen (30, 31) ausgeführt zur Verbindung des Gehäuses 33 mit einer nicht dargestellten Stützvorrichtung.

Der Stützabschnitt 32, spannt mit den Wellenachsen der eintreibenden Welle und der abtreibenden Welle und der Wellenachse zumindest einer nicht dargestellten Zwischenwelle eine Ebene auf. Dabei ist diese Ebene horizontal ausgerichtet. Vorzugsweise ist die Ebene im Wesentlichen parallel zu der Bodenfläche des Gehäuses 33 angeordnet.

Der Abstand des Stützabschnitts 32 zur eintreibenden Welle des Getriebes ist dabei kleiner als der Abstand des Stützabschnitts 32 zur abtreibenden Welle 21 des Getriebes.

Das Gehäuse 33 weist einen Ölstandsensor 7 und ein Entlüftungsmittel 6 auf. Diese sind an der Oberseite des Gehäuses 33 angeordnet. Der Ölstandsensor 7 ist für die Messung des Volumens eines in dem Gehäuse 33 befindlichen Schmiermittels, verzugsweise Öl, vorgesehen.

Ein Ölablassmittel 5 ist an dem Gehäuse 33 angeordnet. Das Ölablassmittel 5 ist an einer kurzen Seite des Gehäuses 33 angeordnet. Dabei ist das Ölablassmittel 5 auf einer dem Stützabschnitt 32 gegenüberliegenden Seite des Gehäuses angeordnet.

Zumindest eine Gewindebohrung 4 ist in der Oberfläche des Gehäuses 33 angeordnet. In diese Gewindebohrung ist eine nicht dargestellte Ringschraube einschraubbar zum Transport des Getriebes. Im rechten Winkel zu dem Stützabschnitt 32 ist eine weitere Auskragung mit einer Bohrung 12 angeordnet, die Bohrung 12 ist als Transportöse ausgeführt.

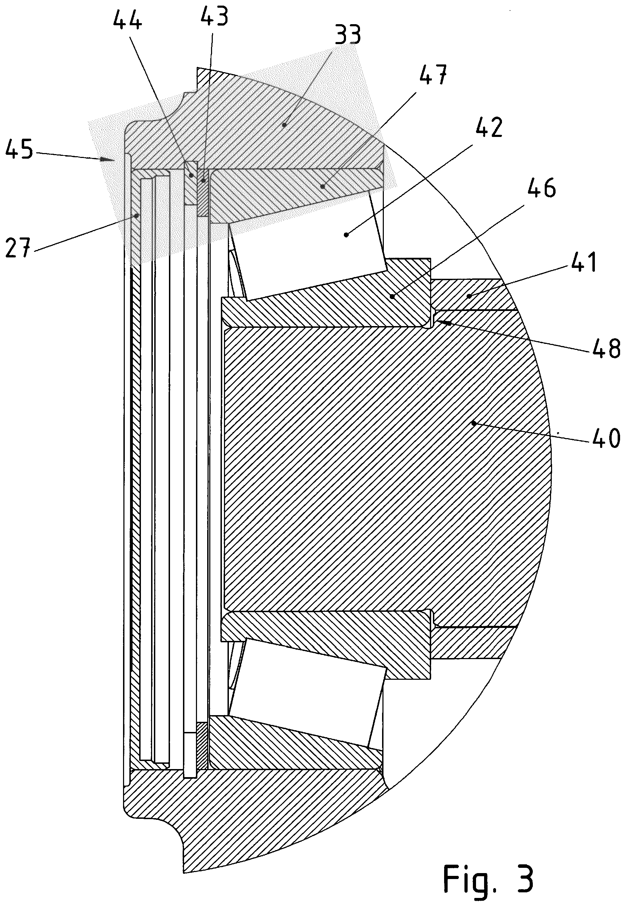

Eine in Figur 3 dargestellte Welle 40 des Getriebes ist mittels eines Lagers in dem Gehäuse 33 des Getriebes gelagert. Das Lager ist in einer durchgehenden Stufenbohrung in dem Gehäuse 33 angeordnet, wobei ein in einer Ringnut in der Stufenbohrung angeordneter Sicherungsring 44 das Lager in Wellenachsrichtung begrenzt. Dabei ist in Wellenachsrichtung zwischen dem Lager und dem Sicherungsring 44 ein Distanzring 43 angeordnet.

Der Radius der Welle 40 verjüngt sich zum Lager hin. Dabei weist der Wellenradius eine Stufe 48 auf, so dass der Radius eines Wellenabschnitts in dem Lager kleiner ist als der Radius eines vom Lager beabstandeten Wellenabschnitts. Dabei ist die Stufe 48 von dem Lager beabstandet, insbesondere ist die Stufe 48 von einem Innenring 46 beabstandet. Auf der Welle 40 ist eine Buchse 41 angeordnet. Dabei berührt die Buchse den Innenring 46. Die Buchse 41 ist axial zwischen dem Lager und einem nicht dargestellten Zahnrad angeordnet.

Die Stufenbohrung in dem Gehäuse 33 ist auf ihrer von der Welle 40 abgewandten Seite mittels eines Deckelteils 27 verschlossen. Dazu ist das Deckelteil 27 kraftschlüssig mit dem Gehäuse 33 verbunden. Das Deckelteil 27 ist als Blechteil ausgeführt, insbesondere als Stahlblechteil, vorzugsweise als Stanzbiegeteil. Das Deckelteil 27 ist zumindest teilweise mit Kunststoff beschichtet. Dabei wird als Kunststoff ein Elastomer verwendet. Vorzugsweise ist das Blechteil genauso dick bis viermal so dick wie die Kunststoffbeschichtung, vorzugsweise doppelt so dick wie die Kunststoffbeschichtung, insbesondere ist das Blechteil zirka 1 mm dick und die Kunststoffbeschichtung ist zirka 0,5 mm dick.

Das Deckelteil 27 ist topfförmig ausgeführt mit einem Bodenabschnitt und einem Wandabschnitt. Die Wandstärke des Wandabschnitts steigt zum Bodenabschnitt hin monoton an. Dabei steigt der Innendurchmesser des Wandabschnitts stufenartig an, vorzugsweise mittels einer einzigen Stufe. Ein dem Lager zugewandter Endbereich des Außendurchmessers des Wandabschnitts weist eine Fase auf. Das heißt, der Außenradius des Wandabschnitts ist konstant und nimmt im Endbereich zur Welle hin in axialer Richtung linear ab.

Die dem Gehäuse 33 zugewandte Seite des Wandabschnitts ist mit Kunststoff beschichtet. Dabei ist also der Kunststoff zwischen dem Gehäuse 33 und dem Blechteil des Deckelteils 27 angeordnet. Die vom Gehäuse 33 abgewandte Seite des Deckelabschnitts ist ebenfalls mit Kunststoff beschichtet.

Die Stufenbohrung umfasst eine Stufe 45 und eine Fase. Dabei ist die Stufe 45 in einem Axialpositionsbereich der Stufenbohrung vorgesehen, der die Fase umfasst.

Zum Verschließen der Stufenbohrung wird also das Deckelteil 27 in die Stufenbohrung gedrückt. Dabei wird das Deckelteil mittels eines Werkzeugs so in die Stufenbohrung eingedrückt, dass ein Oberflächenabschnitt der Außenseite des Deckelteils 27 bündig an die Stufe 45 anschließt. Somit liegen die Stufe 45 und der Oberflächenabschnitt in einer Ebene.

Der gefaste Endbereich der Wandung des Deckelteils wird in die Stufenbohrung eingefädelt und dabei die Wandung des Deckelteils 27 elastisch verformt, so dass ein Kraftschluss entsteht zwischen dem Deckelteil 27 und dem Gehäuse 33. Die Kunststoffbeschichtung des Deckelteils wird ebenfalls elastisch verformt und fungiert als Dichtung zum Gehäuse 33 hin.

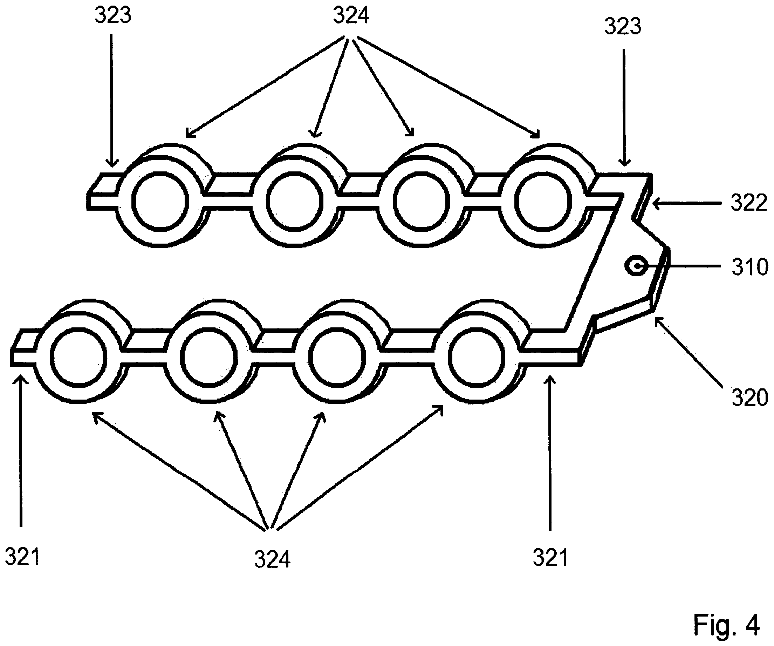

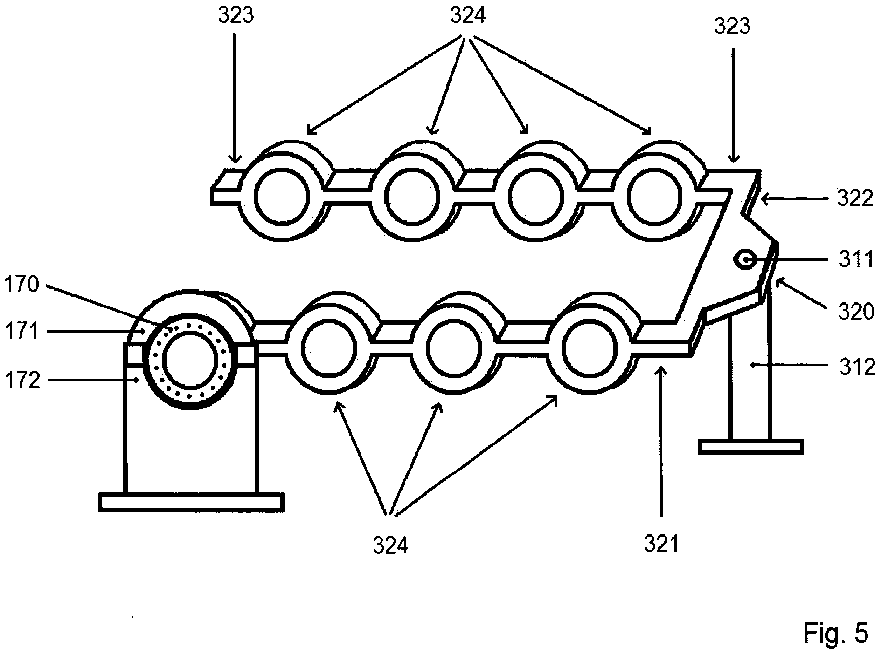

Das Gehäuse 33 weist einen Rahmenabschnitt, der in Figur 4 und 5 dargestellt ist, und einen Hüllabschnitt auf. Dabei ist die Wandstärke des Rahmenabschnitts größer als die Wandstärke des Hüllabschnitts. Der Rahmenabschnitt versteift also das Gehäuse 33 und nimmt die Lager des Getriebes auf, er fungiert als Trageabschnitt, während der Hüllabschnitt die im Gehäuse angeordneten Verzahnungsteile zumindest teilweise gehäusebildend umgibt.

Der Rahmenabschnitt weist einen Mittelschenkelabschnitt 322 und zwei Außenschenkelabschnitte (321, 323) auf. Er ist vorzugsweise einstückig ausgeführt. Dabei ist der Mittelschenkelabschnitt 322 zwischen den Außenschenkelabschnitten (321, 323) angeordnet. Die Außenschenkelabschnitte (321, 323) sind jeweils in einem nicht verschwindenden Winkel zum Mittelschenkelabschnitt 322 angeordnet. Vorzugsweise sind die Außenschenkelabschnitte (321, 323) und der Mittelschenkelabschnitt U-förmig angeordnet.

Die Außenschenkelabschnitte (321, 323) weisen jeweils zumindest einen Ringabschnitt 324 auf, in welchem zumindest ein Lager zur Lagerung der Verzahnungsteile des Getriebes aufgenommen ist. Der jeweilige Ringabschnitt 324 ist also einteilig beziehungsweise einstückig mit dem jeweiligen Außenschenkelabschnitt (321, 323) ausgeführt.
Ein Ring 170 ist mit dem Ringabschnitt 324 lösbar verbunden, vorzugsweise schraubverbunden. Dazu weist der Ring 170 in Umfangsrichtung angeordnete axiale Bohrungen auf, durch welche Schrauben hindurchgeführt sind zur Verbindung mit im Ringabschnitt 324 angeordneten Gewindebohrungen.
Der Ring 170 liegt auf einem Ständerteil 172 auf. Dazu weist das Ständerteil 172 an seiner dem Ring 170 zugewandten Oberseite eine als Einwölbung ausgeführte Vertiefung auf. Ein Teilring 171 ist lösbar mit dem Ständerteil 172 verbunden, insbesondere schraubverbunden. Dabei ist der Ring 170 zwischen dem Teilring 171 und dem Ständerteil 172 zwischengeordnet, insbesondere ist der Ring 170 mittels des Teilrings 171 auf dem Ständerteil 172 fixiert. Dabei trägt das Ständerteil 172 zumindest teilweise das Gewicht des Getriebes und des mit dem Getriebe verbundenen nicht dargestellten Motors und/oder der mit dem Getriebe verbundenen nicht dargestellten Applikation.

Der Teilring 171 fungiert also als Sicherungsbügel für das Ständerteil 172. Dabei begrenzt der Teilring 171 den Ring 170 in radialer Richtung. Somit sind das Ständerteil 172 und der Teilring 171 formschlüssig mit dem Ring 170 verbunden. Vorzugsweise ist die Verbindung des Ständerteils 172 und des Teilrings 171 mit dem Ring 170 mit Spiel behaftet.

Der Mittelschenkelabschnitt 322 weist einen als Auskragung ausgeführten Stützabschnitt 320 auf. Der Stützabschnitt 320 ist dabei einteilig mit dem Mittelschenkelabschnitt 323 ausgeführt. Dabei weist der Stützabschnitt 320 eine Bohrung 310 auf, wobei die Bohrrichtung parallel zu dem Normalenvektor einer von dem Rahmenabschnitt aufgespannten Ebene ist. Mittels eines durch die Bohrung hindurchgeführten Verbindungsmittels 311 ist der Stützabschnitt 320 mit einem Stützteil 312 verbunden, vorzugsweise schraubverbunden.
Das Stützteil 312 und das Ständerteil172 sind zumindest indirekt mit einem Fundament oder einer Tragestruktur verbunden, beispielsweise verschraubt.

In einem weiteren nicht dargestellten Ausführungsbeispiel weist das Gehäuse 33 eine Lackierung auf. Die Lackierung erstreckt sich dabei auf die Deckelteile (8, 9, 22, 23, 26, 27, 28), das Deckelteil 2, den Ring 17, die Flanschkupplung 19, den Flanschabschnitt 10, und/oder das Abdeckteil 14.

In einem weiteren nicht dargestellten Ausführungsbeispiel ist die eintreibende Welle durch eine Bohrung in der Anschlussfläche 39 hindurchgeführt, so dass die eintreibende Welle an zwei Seiten des Gehäuses 33 aus dem Gehäuse 33 herausragt. Dabei ist eine externe Bremse auf der vom Motor abgewandten Seite des Gehäuses 33 mit der eintreibenden Welle verbind bar.

### Bezugszeichenliste

1 Versteifungsflächenabschnitt
2 Deckelteil
3 Befestigungsmittel
4 Gewindebohrung
5 Ölablassmittel
6 Entlüftungsmittel
7 Ölstandsensor
8 Deckelteil
9 Deckelteil
10 Flanschabschnitt
11 Verbindungsabschnitt
12 Bohrung
13 Befestigungsmittel
14 Abdeckteil
15 Befestigungsmittel
16 Verschlussteil
17 Ring
18 Befestigungsmittel
19 Flanschkupplung
20 Sicherungsring
21 Welle
22 Deckelteil
23 Deckelteil
24 Gewindebohrung
25 Zentrierbohrung
26 Deckelteil
27 Deckelteil
28 Deckelteil
29 Gewindebohrung
30 Bohrung
31 Bohrung
32 Stützabschnitt
33 Gehäuse
34 Oberflächenabschnitt
35 Bohrung
36 Bohrung
37 Bohrung
38 Bohrung
39 Anschlussfläche
40 Welle
41 Buchse
42 Wälzkörper
43 Distanzring
44 Sicherungsring
45 Stufe
46 Innenring
47 Außenring
48 Stufe
170 Ring
171 Teilring
172 Ständerteil
310 Bohrung
311 Verbindungsmittel
312 Stützteil
320 Stützabschnitt
321 Außenschenkelabschnitt
322 Mittelschenkelabschnitt
323 Außenschenkelabschnitt
324 Ringabschnitt

## Patentansprüche

1. Getriebe mit einer Lageranordnung,
wobei die Lageranordnung mit einem Gehäuseteil vorgesehen ist, wobei eine Welle (40) mittels eines Lagers im Gehäuseteil gelagert ist, wobei das Lager in einer durchgehenden Stufenbohrung im Gehäuseteil aufgenommen ist,
wobei ein Deckelteil (27) die Stufenbohrung verschließt,
wobei das Deckelteil (27) mit dem Gehäuseteil kraftschlüssig verbunden ist,
wobei das Deckelteil (27) in der Stufenbohrung aufgenommen ist,
wobei ein Oberflächenabschnitt der Außenseite des Deckelteils (27) in einer Flucht angeordnet ist zu einer Stufe (45) der Stufenbohrung,
wobei axial zwischen dem Lager und dem Deckelteil (27) ein Sicherungsring (44) in einer radial gerichteten Ringnut der Stufenbohrung angeordnet ist,
wobei der Sicherungsring (44) von dem Deckelteil (27) beabstandet ist, **dadurch gekennzeichnet, dass** ein Distanzring (43) axial zwischen dem Sicherungsring (44) und einem Außenring (47) des Lagers angeordnet ist, wobei der Sicherungsring (44) zusammen mit dem Distanzring (43) den Außenring (47) des Lagers axial begrenzt,
wobei ein Gehäuse (33) des Getriebes alle Verzahnungsteile des Getriebes umgibt und die Lager des Getriebes aufnimmt,
wobei das Gehäuse (33) einen Rahmenabschnitt und einen Hüllabschnitt aufweist,
wobei der Rahmenabschnitt eine größere Wandstärke aufweist als der Hüllabschnitt,
wobei der Rahmenabschnitt zwei Außenschenkelabschnitte (321, 323) und einen Mittelschenkelabschnitt (322) aufweist,
wobei zumindest ein Außenschenkelabschnitt (321, 323) zumindest einen Ringabschnitt (324) aufweist,
wobei der Mittelschenkelabschnitt (322) einen Stützabschnitt (320) aufweist,
wobei ein Kupplungsgehäuse mit dem Rahmenabschnitt verbunden ist,
wobei der Außendurchmesser des Kupplungsgehäuses zum Gehäuse (33) hin abnimmt,
wobei im Innendurchmesser des Kupplungsgehäuses zum Gehäuse (33) hin eine Stufe ausgebildet ist, so dass die Wandstärke des Kupplungsgehäuses stufenartig zunimmt.

2. Getriebe nach Anspruch 1,
**dadurch gekennzeichnet, dass**
der Innendurchmesser der Stufenbohrung in Wellenachsrichtung, monoton abnimmt, wobei die Stufe (45) der Stufenbohrung eine Fase umfasst.

3. Getriebe nach mindestens einem der vorangegangenen Ansprüche,
**dadurch gekennzeichnet, dass**
die Axialposition des Oberflächenabschnitts die am weitesten vom Lager entfernte Axialposition des Deckelteils (27) ist.

4. Getriebe nach mindestens einem der vorangegangenen Ansprüche,
**dadurch gekennzeichnet, dass**
das Deckelteil (27) topfförmig ausgeführt ist,
wobei das Deckelteil (27) einen Bodenabschnitt und einen Wandabschnitt aufweist, wobei die Wandstärke des Wandabschnitts zum Bodenabschnitt hin monoton zunimmt.

5. Getriebe nach mindestens einem der vorangegangenen Ansprüche,
**dadurch gekennzeichnet, dass**
das Deckelteil (27) als Blechteil ausgeführt ist,
wobei das Blechteil zumindest teilweise mit Kunststoff beschichtet ist,
wobei der Kunststoff ein Elastomer ist.

6. Getriebe nach mindestens einem der vorangegangenen Ansprüche,
**dadurch gekennzeichnet, dass**
der Radius der Welle (40) zum Lager hin stufenartig abnimmt, wobei eine Stufe (48) in der Welle (40) von einem Innenring (46) des Lagers beabstandet ist,
wobei der maximale Außenradius der Welle (40) größer ist als ein Innenradius des Innenrings (46),
wobei eine Buchse (41) auf der Welle (40) angeordnet ist,
wobei die Buchse (41) den Innenring (46) berührt.

7. Getriebe nach mindestens einem der vorangegangenen Ansprüche, **dadurch gekennzeichnet, dass** ein Ring (170) mit dem Ringabschnitt (324) verbunden ist,
wobei das Gehäuse (33) auf einem Ständerteil (172) zumindest teilweise abgestützt angeordnet ist,
wobei das Ständerteil (172) eine Vertiefung zur Aufnahme des Rings (170) aufweist.

8. Getriebe nach Anspruch 7,
**dadurch gekennzeichnet, dass**
durch die Außenschenkelabschnitte (321, 323) und den Mittelschenkelabschnitt (322) eine Ebene aufgespannt ist.

9. Getriebe nach mindestens einem der vorangegangenen Ansprüche,
**dadurch gekennzeichnet, dass**
die Wandstärke des Rahmenabschnitts größer ist als in jedem anderen Bereich des Gehäuses (33).

10. **Getriebe** nach mindestens einem der vorangegangenen Ansprüche,
**dadurch gekennzeichnet, dass**
jeweils zumindest ein Ringabschnitt (324) jedes Außenschenkelabschnitts (321, 323) jeweils zumindest eine Lageraufnahme aufweist, in der ein Lager aufgenommen ist zur Lagerung zumindest einer Welle des Getriebes,
wobei eine abtreibende Welle des Getriebes mittels Lagern in Ringabschnitten (324) der Außenschenkelabschnitte (321, 323) gelagert ist.

11. Getriebe nach mindestens einem der vorangegangenen Ansprüche,
**dadurch gekennzeichnet, dass**
der Stützabschnitt (320) aus dem Mittelschenkelabschnitt (322) auskragt und/oder hervorragt,
wobei der Stützabschnitt (320) mit einem Stützteil (312) verbunden ist.

12. Getriebe nach mindestens einem der vorangegangenen Ansprüche,
**dadurch gekennzeichnet, dass**
ein Teilabschnitt des Kupplungsgehäuses eine größere Wandstärke aufweist als andere Bereiche des Kupplungsgehäuses.

13. Getriebe nach mindestens einem der vorangegangenen Ansprüche,
**dadurch gekennzeichnet, dass**
eine eintreibende Welle des Getriebes sich von dem Kupplungsgehäuse durch den ersten und den zweiten Außenschenkelabschnitt (321, 323) hindurch erstreckt.

14. Getriebe nach Anspruch 13 und Anspruch 10, **dadurch gekennzeichnet, dass**
der Hüllabschnitt einen Versteifungsflächenabschnitt (1) aufweist,
wobei die Ausdehnung des Gehäuses (33) in einer Richtung senkrecht zur Achse der abtreibenden Welle und senkrecht zu den Außenschenkelabschnitten (321, 323), von der abtreibenden Welle des Getriebes zur eintreibenden Welle des Getriebes hin monoton abnimmt.

## Claims

1. Gear unit with a bearing arrangement,
wherein the bearing arrangement is provided with a housing component, wherein a shaft (40) is supported with the aid of a bearing in the housing component,
wherein the bearing is accommodated in a stepped bore in the housing component, which extends through the housing component,
wherein a lid part (27) seals the stepped bore,
wherein the lid part (27) is frictionally connected to the housing component (27),
wherein the lid part (27) is accommodated in the stepped bore,
wherein a surface section of the outside of the lid part (27) is situated in alignment with a step (45) of the stepped bore,
wherein a retaining ring (44) is axially situated between the bearing and the lid part (27), in a radially oriented annular groove of the stepped bore,
wherein the retaining ring (44) is set apart from the lid part (27),
**characterised in that**
a spacer ring (43) is situated axially between the retaining ring (44) and an outer ring (47) of the bearing, wherein the retaining ring (44) together with the spacer ring (43) axially delimits the outer ring (47) of the bearing,
wherein a housing (33) of the gear unit surrounds all toothed elements of the gear unit and accommodates the bearings of the gear unit,
wherein the housing (33) has a frame section and a cladding section,
wherein the frame section has a greater wall thickness than the cladding section,
wherein the frame section has two outer leg sections (321, 323) and a centre leg section (322),
wherein at least one outer leg section (321, 323) has at least one annular section (324),
wherein the centre leg section (322) has a support section (320),
wherein a clutch housing is connected to the frame section,
wherein the outer circumference of the clutch housing decreases towards the housing (33),
wherein a step is formed in the inner diameter of the clutch housing in the direction of the housing (33), so that the wall thickness of the clutch housing increases in a stepwise manner.

2. Gear unit according to claim 1,
**characterised in that**
the inner diameter of the stepped bore decreases monotonically in the direction of the shaft axis,
wherein the step (45) of the stepped bore comprises a bevel.

3. Gear unit according to at least one of the preceding claims,
**characterised in that**
the axial position of the surface section is the axial position of the lid part (27) that lies farthest from the bearing.

4. Gear unit according to at least one of the preceding claims,
**characterised in that**
the lid part (27) is configured in the form of a cup,
wherein the lid part (27) has a base section and a wall section,
wherein the wall thickness of the wall section increases monotonically towards the base section.

5. Gear unit according to at least one of the preceding claims,
**characterised in that** the lid part (27) is configured as a sheet-metal part,
wherein the sheet-metal part is at least partially plastic-coated,
wherein the plastic is an elastomer.

6. Gear unit according to at least one of the preceding claims,
**characterised in that**
the radius of the shaft (40) decreases in a stepwise manner in the direction of the bearing, wherein a step (48) in the shaft (40) is set apart from an inner ring (46) of the bearing,
wherein the maximum outer radius of the shaft (40) is greater than an inner radius of the inner ring (46),
wherein a bushing (41) is situated on the shaft (40),
wherein the bushing (41) touches the inner ring (46).

7. Gear unit according to at least one of the preceding claims,
**characterised in that**
a ring (170) is connected to the annular section (324),
wherein the housing (33) is situated on a stand element (172) so as to be at least partially supported,
wherein the stand element (172) has a depression in order to accommodate the ring (170).

8. Gear unit according to claim 7,
**characterised in that** a plane is spanned by the outer leg sections (321, 323) and the centre leg section (322).

9. Gear unit according to at least one of the preceding claims,
**characterised in that**
the wall thickness of the frame section is greater than in any other region of the housing (33).

10. Gear unit according to at least one of the preceding claims,
**characterised in that**
at least one annular section (324) of each outer leg section (321, 323) has at least one bearing seat in each case, in which a bearing is accommodated in order to support at least one shaft of the gear unit,
wherein an output shaft of the gear unit is supported in annular sections (324) of the outer leg sections (321, 323) with the aid of bearings.

11. Gear unit according to at least one of the preceding claims,
**characterised in that**
the support section (320) overhangs the centre leg section (322) and/or projects from it,
wherein the support section (320) is connected to a support element (312).

12. Gear unit according to at least one of the preceding claims,
**characterised in that** a subsection of the clutch housing has a greater wall thickness than other areas of the clutch housing.

13. Gear unit according to at least one of the preceding claims,
**characterised in that**
an input shaft of the gear unit extends from the clutch housing through the first and second outer leg sections (321, 323).

14. Gear unit according to claim 13 and claim 10,
**characterised in that**
the cladding section has a reinforcement surface section,
wherein the extension of the housing (33) decreases monotonically from the output shaft of the gear unit to the input shaft of the gear unit in a direction perpendicular to the axis of the output shaft and perpendicularly to the outer leg sections (321, 323).

## Revendications

1. Transmission équipée d'un ensemble de montage,
ledit ensemble de montage étant pourvu d'une partie formant boîtier, un arbre (40) étant monté dans ladite partie formant boîtier, au moyen d'un palier,
lequel palier est logé dans un alésage étagé continu, pratiqué dans ladite partie formant boîtier,
une partie (27), formant couvercle, occultant ledit alésage étagé,
laquelle partie (27), formant couvercle, est reliée par engagement positif à ladite partie formant boîtier,
ladite partie (27) formant couvercle étant intégrée dans ledit alésage étagé,
sachant qu'une région superficielle de la face extérieure de ladite partie (27), formant couvercle, se trouve dans l'affleurement d'un gradin (45) dudit alésage étagé,
une bague d'arrêt (44) étant interposée axialement entre le palier et la partie (27) formant couvercle, dans une rainure annulaire de l'alésage étagé orientée dans le sens radial, ladite bague d'arrêt (44) étant située à distance de ladite partie (27) formant couvercle,
**caractérisée par le fait**
**qu'**une bague d'espacement (43) est interposée axialement entre la bague d'arrêt (44) et une bague extérieure (47) du palier, ladite bague d'arrêt (44) délimitant ladite bague extérieure (47) dudit palier, dans le sens axial, en association avec ladite bague d'espacement (43),
sachant qu'un carter (33) de la transmission entoure toutes les parties dentées de ladite transmission, et reçoit les paliers de ladite transmission,
lequel carter (33) comprend une zone d'encadrement et une zone d'enveloppement,
la zone d'encadrement présentant une épaisseur de paroi supérieure à celle de la zone d'enveloppement,
ladite zone d'encadrement comportant deux tronçons (321, 323) formant ailes extérieures et un tronçon (322) formant aile médiane,
sachant qu'au moins un tronçon (321, 323), formant aile extérieure, est doté d'au moins un segment annulaire (324),
sachant que ledit tronçon (322), formant aile médiane, est muni d'une zone d'appui (320), un carter d'embrayage étant relié à ladite zone d'encadrement,
sachant que le diamètre extérieur dudit carter d'embrayage décroît en direction du carter (33),
un gradin étant ménagé dans le diamètre intérieur du carter d'embrayage, en direction dudit carter (33), de sorte que l'épaisseur de paroi dudit carter d'embrayage croît de manière étagée.

2. Transmission selon la revendication 1,
**caractérisée par le fait que**
le diamètre intérieur de l'alésage étagé présente une décroissance monotone dans la direction axiale de l'arbre,
le gradin (45) dudit alésage étagé étant pourvu d'un chanfrein.

3. Transmission selon au moins l'une des revendications précédentes,
**caractérisée par le fait que**
l'emplacement axial de la région superficielle est l'emplacement axial de la partie (27), formant couvercle, qui est le plus éloigné du palier.

4. Transmission selon au moins l'une des revendications précédentes,
**caractérisée par le fait que**
la partie (27), formant couvercle, est réalisée avec configuration en pot,
ladite partie (27), formant couvercle, comprenant une zone de fond et une zone de paroi, l'épaisseur de ladite zone de paroi présentant une croissance monotone en direction de ladite zone de fond.

5. Transmission selon au moins l'une des revendications précédentes,
**caractérisée par le fait que**
la partie (27), formant couvercle, est réalisée en tant que pièce en tôle,
ladite pièce en tôle étant au moins partiellement revêtue de matière plastique,
laquelle matière plastique est un élastomère.

6. Transmission selon au moins l'une des revendications précédentes,
**caractérisée par le fait que**
le rayon de l'arbre (40) décroît de manière étagée en direction du palier, un gradin (48), façonné dans ledit arbre (40), étant alors situé à distance d'une bague intérieure (46) dudit palier,
sachant que le rayon extérieur maximal de l'arbre (40) est plus grand qu'un rayon intérieur de la bague intérieure (46),
une douille (41) étant placée sur ledit arbre (40),
laquelle douille (41) touche ladite bague intérieure (46).

7. Transmission selon au moins l'une des revendications précédentes,
**caractérisée par le fait**
**qu'**une bague (170) est reliée au segment annulaire (324),
le carter (33) étant agencé pour prendre au moins partiellement appui sur une partie de support (172),
laquelle partie de support (172) est munie d'un renfoncement affecté à la réception de ladite bague (170).

8. Transmission selon la revendication 7,
**caractérisée par le fait**
**qu'**un plan est démarqué par les tronçons (321, 323) formant ailes extérieures et par le tronçon (322) formant aile médiane.

9. Transmission selon au moins l'une des revendications précédentes,
**caractérisée par le fait que**
l'épaisseur de paroi de la zone d'encadrement est plus grande que dans toute autre région du carter (33).

10. Transmission selon au moins l'une des revendications précédentes,
**caractérisée par le fait**
**qu'**au moins un segment annulaire (324) de chaque tronçon (321, 323) formant aile extérieure est doté, à chaque fois, d'au moins un logement respectif dans lequel un palier est intégré, en vue du montage d'au moins un arbre de ladite transmission,
sachant qu'un arbre de sortie de ladite transmission est monté, au moyen de paliers, dans des segments annulaires (324) des tronçons (321, 323) formant ailes extérieures.

11. Transmission selon au moins l'une des revendications précédentes,
**caractérisée par le fait que**
la zone d'appui (320) est en débord et/ou en saillie au-delà du tronçon (322) formant aile médiane,
ladite zone d'appui (320) étant reliée à une partie d'appui (312).

12. Transmission selon au moins l'une des revendications précédentes,
**caractérisée par le fait**
**qu'**une zone partielle du carter d'embrayage présente une plus grande épaisseur de paroi que d'autres régions dudit carter d'embrayage.

13. Transmission selon au moins l'une des revendications précédentes,
**caractérisée par le fait**
**qu'**un arbre d'entrée de ladite transmission traverse de part en part, à partir du carter d'embrayage, les premier et second tronçons (321, 323) formant ailes extérieures.

14. Transmission selon la revendication 13 et la revendication 10,
**caractérisée par le fait que**
la zone d'enveloppement est pourvue d'une région superficielle de rigidification (1),
sachant que l'étendue du carter (33) présente une décroissance monotone, depuis l'arbre de sortie de la transmission jusqu'à l'arbre d'entrée de ladite transmission, dans une direction perpendiculaire à l'axe dudit arbre de sortie et perpendiculaire aux tronçons (321, 323) formant ailes extérieures.
